# EUROPÄISCHE PATENTANMELDUNG

(11) **EP 4 109 703 A1**
(43) Veröffentlichungstag der Anmeldung: **28.12.2022**
(21) Anmeldenummer: 21181111.2
(22) Anmeldetag: 23.06.2021
(51) Int. Cl.: H02J 7/00, B25F 5/00, H02P 27/08, H02K 7/14, H02J 7/14, H02J 7/34

(54) **WERKZEUGMASCHINE UND VERFAHREN ZUM BETRIEB EINER WERKZEUGMASCHINE**

(71) Anmelder: Hilti Aktiengesellschaft, 9494 Schaan (LI)
(72) Erfinder: Hurka, Florian, 86459 Margertshausen (DE); Wißmach, Walter, 80637 Muenchen (DE)
(74) Vertreter: Hilti Aktiengesellschaft Corporate Intellectual Property

(57) **Zusammenfassung**

Die Erfindung betrifft eine Werkzeugmaschine mit einem Motor, wobei der Motor einen Rotor und einem Stator umfasst und wobei der Stator eine erste Wicklung und eine zweite Wicklung umfasst, wobei die Wicklungen so ausgebildet sind, dass die Wicklungen einen Betrieb des Motors der Werkzeugmaschine mit im Wesentlichen voller Drehzahl, aber im Wesentlichen halber Leistung im Vergleich zu dem Vergleichsmotor ermöglichen. Dabei sind bei dem Vergleichsmotor die Stator-Spulen im Wesentlichen vollständig mit einer durchgehenden Draht-Schicht umwickelt. In weiteren Aspekten betrifft die Erfindung ein Verfahren zum Betrieb einer solchen Werkzeugmaschine und ein Verfahren zur Durchführung eines Ladungsausgleichs zwischen zwei Akkumulatoren in einer Werkzeugmaschine. Dabei kann der doppelt gewickelte Stator in Verbindung mit einer Brückenschaltung aus Motor-Invertern und Stator-Spulen dazu verwendet werden, den Ladungsausgleich zwischen zwei Akkumulatoren in einer Werkzeugmaschine zu ermöglichen.

## Beschreibung

Die Erfindung betrifft eine Werkzeugmaschine mit einem Motor, wobei der Motor einen Rotor und einem Stator umfasst und wobei der Stator eine erste Wicklung und eine zweite Wicklung umfasst, wobei die Wicklungen so ausgebildet sind, dass die Wicklungen einen Betrieb des Motors der Werkzeugmaschine mit im Wesentlichen voller Drehzahl, aber im Wesentlichen halber Leistung im Vergleich zu dem Vergleichsmotor ermöglichen. Dabei sind bei dem Vergleichsmotor die Stator-Spulen im Wesentlichen vollständig mit einer durchgehenden Draht-Schicht umwickelt. In weiteren Aspekten betrifft die Erfindung ein Verfahren zum Betrieb einer solchen Werkzeugmaschine und ein Verfahren zur Durchführung eines Ladungsausgleichs zwischen zwei Akkumulatoren in einer Werkzeugmaschine. Dabei kann der doppelt gewickelte Stator in Verbindung mit einer Brückenschaltung aus Motor-Invertern und Stator-Spulen dazu verwendet werden, den Ladungsausgleich zwischen zwei Akkumulatoren in einer Werkzeugmaschine zu ermöglichen.

### Hintergrund der Erfindung:

Im Stand der Technik sind Werkzeugmaschinen bekannt, mit denen unterschiedliche Arbeiten durchgeführt werden können. Beispielsweise sind Bohrhämmer, Meißelgeräte, Trenn- oder Winkelschleifer, Schraubgeräte oder Kembohrgeräte bekannt, bei denen jeweils ein Werkzeug durch einen Motor angetrieben wird. Eine Energieversorgung kann über einen Netzanschluss oder mit Batterien oder Akkumulatoren ("Akkus") bereitgestellt werden.

Es sind eine Reihe von Anwendungsfällen solcher Werkzeugmaschinen bekannt, bei denen hohe Leistungen erforderlich sind, um die entsprechenden Arbeiten durchzuführen. Bei Werkzeugmaschinen, deren Energieversorgung von einem Akkumulator gebildet wird, kann es vorkommen, dass die für die Arbeit erforderliche Leistung die maximal mögliche Abgabeleistung des Akkus übersteigt. Um dieser Herausforderung zu begegnen, werden solche Werkzeugmaschinen häufig mit einer Schnittstelle für zwei Akkumulatoren ausgestattet, um mit zwei Akkus, die in Reihe oder parallel geschaltet werden können, die gewünschte Leistung bereitstellen zu können.

Bei der Arbeit mit Werkzeuggeräten mit zwei Akkumulatoren kann aber folgendes Problem auftreten: Wenn einer der Akkus ganz oder teilweise entladen ist, kann für die Werkzeugmaschine nicht über den gesamten Arbeitszeitraum die volle Leistung erbracht werden. Sobald einer der Akkus vollständig entladen ist, kann keine weitere Leistung aus den Akkus entnommen werden. Die Arbeit mit der Werkzeugmaschine muss dann möglichweise - trotz vorhandener Restladung in einer der beiden Akkus - beendet werden.

Im Stand der Technik sind Verfahren bekannt, mit denen ein Ladungsausgleich zwischen elektrischen Komponenten in einer Werkzeugmaschine ermöglicht werden kann. Beispielsweise offenbart US 5 631 534 A eine Anordnung zur von elektronischen Bauteilen, um einen Ladungsausgleich zwischen Batterien, die in Reihe geschaltet sind, zu ermöglichen. Wenn ein solches Balancing-Verfahren auf Geräte- bzw. Akkumulator-Ebene realisiert werden soll, sind für eine solche Anordnung eine Vielzahl von Bauteilen erforderlich, beispielsweise verschiedene Schalter, Treiber, Induktivitäten und Strommessvorrichtungen. Solche Anordnung sind aufwändig in der Herstellung und fehleranfällig.

Außerdem ist aus dem Stand der Technik das Problem bekannt, dass bei bekannten Balancing-Methoden ein Ladungsausgleich nur bei Stillstand der Werkzeugmaschine erfolgen kann.

Aufgabe der vorliegenden Erfindung ist es daher, die vorstehend beschriebenen Mängel und Nachteile des Standes der Technik zu überwinden und eine verbesserte Werkzeugmaschine mit mindestens zwei Akkumulatoren sowie ein Verfahren zum Betrieb einer Werkzeugmaschine bereitzustellen, mit denen ein Ladungsausgleich zwischen den Akkus ermöglicht werden soll. Ein Anliegen der Erfindung ist insbesondere auch, dass der Ladungsausgleich in beide Richtungen erfolgen soll. Die Fachwelt würde es darüber hinaus begrüßen, wenn eine technische Lösung bereitgestellt werden könnte, mit der ein Ladungsausgleich zwischen den Akkumulatoren einer Werkzeugmaschine zumindest auch während des Betriebs bzw. während der Arbeit mit der Werkzeugmaschine durchgeführt werden kann.

Die Aufgabe wird gelöst durch den Gegenstand der unabhängigen Ansprüche. Vorteilhafte Ausführungsformen des erfindungsgemäßen Gegenstands werden in den abhängigen Ansprüchen beschrieben.

### Beschreibung der Erfindung:

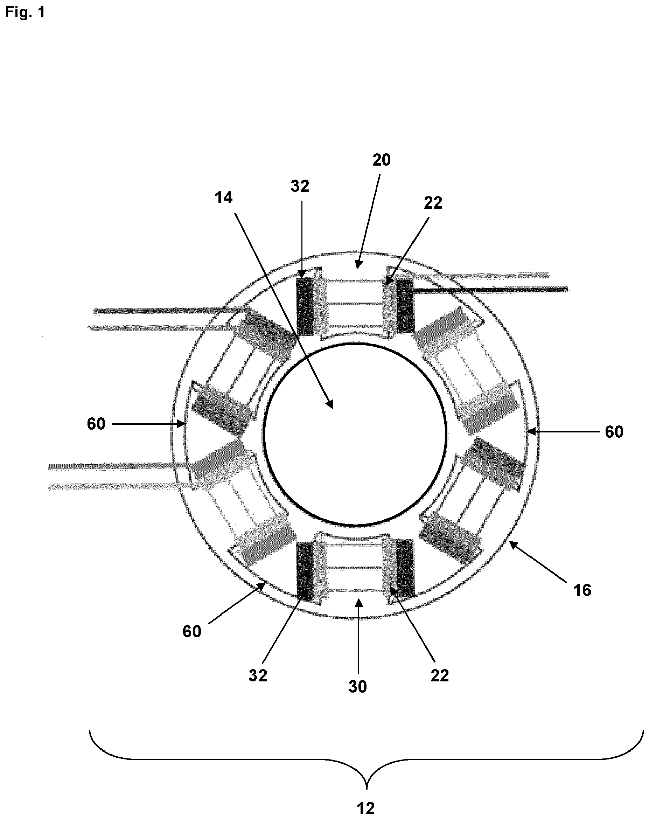

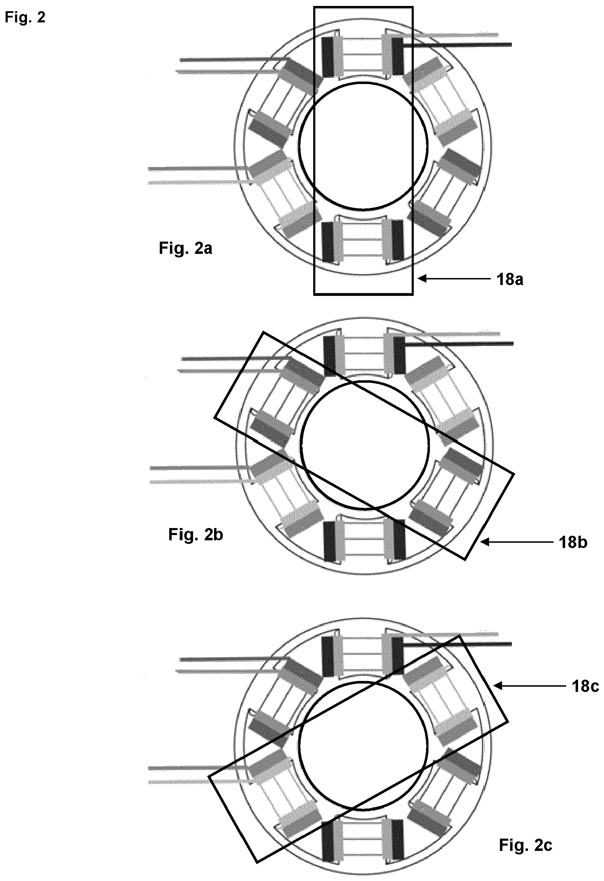

Die Aufgabe wird dabei in einem ersten Aspekt durch eine Werkzeugmaschine mit einem Motor gelöst, wobei der Motor einen Rotor und einem Stator umfasst. Der Stator umfasst eine erste Wicklung und eine zweite Wicklung, wobei die Wicklungen so ausgebildet sind, dass die Wicklungen einen Betrieb des Motors der Werkzeugmaschine mit einer Drehzahl im Bereich eines Vergleichsmotors, aber im Wesentlichen halber Leistung im Vergleich zu dem Vergleichsmotor ermöglichen, wobei die Stator-Spulen des Vergleichsmotors im Wesentlichen vollständig mit einer durchgehenden Wicklung gewickelt sind. Eine mögliche Ausgestaltung eines solchen doppelt gewickelten Stators wird in Fig. 1 dargestellt. Die einzelnen Stator-Spulen-Paare sind in Fig. 2 abgebildet.

In dem vorgeschlagenen Aufbau eines Elektromotors ist ein Rotor im Inneren des Motors angeordnet, während der Stator um den Rotor herum angeordnet vorliegt. Der Stator kann beispielsweise drei Stator-Spulen-Paare umfassen, die jeweils aus einer ersten und einer zweiten Stator-Spule bestehen können. Die Stator-Spulen können insbesondere kreisförmig um den Rotor des Motors der Werkzeugmaschine angeordnet vorliegen. Es ist im Sinne der Erfindung bevorzugt, dass sich die Stator-Spulen eines Stator-Spulen-Paares innerhalb des Stators im Wesentlichen gegenüberliegen. Somit kann eine Anordnung von Stator-Spulen beispielsweise so ausgebildet sein, dass auf eine erste Spule des ersten Spulen-Paares eine erste Spule des zweiten Spulen-Paares folgt, dann die erste Spule des dritten Spulen-Paares, dann die zweite Spule des ersten Spulen-Paares, dann die zweite Spule des zweiten Spulen-Paares und dann die zweite Spule des dritten Spulen-Paares.

Es kann im Kontext der Erfindung auch eine ungerade Anzahl von Stator-Spulen vorgesehen sein. Der Stator der vorgeschlagenen Werkzeugmaschine kann beispielsweise neun Stator-Spulen umfassen bzw. neun-nutig ausgebildet sein. Es ist im Sinne der Erfindung bevorzugt, dass eine Topologie des Motors der vorgeschlagenen Werkzeugmaschine der Topologie eines konventionellen Motors entspricht, wobei seine Stator-Spulen beispielsweise "halb so groß" wie bei einem Standard-Motor sind. Der Begriff "halb so groß" bedeutet im Sinne der Erfindung in Bezug auf die Stator-Spulen bevorzugt, dass der Draht, mit dem die Stator-Spulen gewickelt sind, einen im Wesentlichen halb so großen Durchmesser aufweist, wie der Draht, mit dem die Stator-Spulen eines konventionellen Standard-Motors gewickelt sind. Mit anderen Worten ist der Draht, mit dem die Stator-Spulen des Motors der hier vorgeschlagenen Werkzeugmaschine gewickelt sind, halb so dick wie der Draht, mit dem die Stator-Spulen eines konventionellen Vergleichsmotors gewickelt sind. Um die dadurch bedingte geringere Menge an Metall bzw. induktivem Material auszugleichen, ist es im Sinne der Erfindung bevorzugt, dass die Stator-Spulen des vorgeschlagenen Motors doppelt gewickelt sind. Das bedeutet im Sinne der Erfindung beispielsweise, dass jeder Zahn des Stators zweimal umwickelt wird bzw. mit der doppelten Anzahl von Windungen im Vergleich zu einem konventionellen Standard-Motor.

Es ist im Sinne der Erfindung bevorzugt, dass die Stator-Spulen des Stators in dem Sinne gleich oder im Wesentlichen gleich gewickelt sind, dass ihre Wicklungen eine erste Draht-Schicht und eine zweite Draht-Schicht umfassen, wobei die Draht-Schichten so ausgebildet sind, dass sie einen Betrieb des Motors der Werkzeugmaschine mit einer Drehzahl im Bereich der Drehzahl eines Vergleichsmotors, aber im Wesentlichen halber Leistung im Vergleich zu dem Vergleichsmotor ermöglichen. Der Betrieb des Motors mit halber Leistung im Vergleich zu einem Vergleichsmotor wird insbesondere durch die Vorsehung von zwei Draht-Schichten ermöglicht, die in den Stator-Spulen vorhanden sind und die eine erste und eine zweite Wicklung des Stators des Motors der Werkzeugmaschine bilden.

Es ist im Sinne der Erfindung bevorzugt, dass die Stator-Spulen eine erste Draht-Schicht und eine zweite Draht-Schicht umfassen, wobei die erste Draht-Schicht vorzugsweise eine innenliegende Draht-Schicht ist, während die zweite Draht-Schicht vorzugsweise eine außenliegende Draht-Schicht ist. Der Draht kann vorzugsweise Kupfer oder eine Kupfer-Legierung umfassen. Die bifiliare Wicklung der Stator-Spulen des vorgeschlagenen Motors stellt einen Grundgedanken der vorliegenden Erfindung dar. Vorzugsweise stellen die beiden Wicklungen zwei elektrisch bzw. galvanisch voneinander getrennte Spulen dar, die zusammen eine Stator-Spule des Motors der vorgeschlagenen Werkzeugmaschine bilden. Dabei liegen die beiden elektrisch bzw. galvanisch voneinander getrennte Wicklungen vorzugsweise um einen Zahn des Stators herum vor.

Es ist im Sinne der Erfindung bevorzugt, dass die ersten Draht-Schichten von zwei Stator-Spulen, die nebeneinander im Stator angeordnet vorliegen, elektrisch leitend miteinander verbunden vorliegen. Mit anderen Worten besteht eine elektrisch leitfähige Verbindung zwischen den ersten Draht-Schichten von zwei nebeneinanderliegenden Stator-Spulen. Beispielsweise kann eine erste Draht-Schicht einer Stator-Spule des zweiten Stator-Spulen-Paares auf der einen Seite mit der ersten Draht-Schicht einer Stator-Spule des ersten Stator-Spulen-Paares verbunden vorliegen, während dieser erste Draht-Schicht einer Stator-Spule des zweiten Stator-Spulen-Paares auf der anderen Seite mit der ersten Draht-Schicht einer Stator-Spule des dritten Stator-Spulen-Paares verbunden vorliegt. Darüber hinaus kann je eine elektrische Verbindung der ersten Draht-Schichten eines Stators untereinander bestehen.

Es ist im Sinne der Erfindung bevorzugt, dass der Stator zweimal im Wesentlichen identisch bewickelt wird. Die Vorsehung eines Stators mit zwei Wicklungen wird im Sinne der Erfindung bevorzugt als "doppelt gewickelter Stator" bezeichnet. Die "doppelte Wicklung" wird insbesondere durch die erste Wicklung und die zweite Wicklung des Stators erreicht, wobei die Wicklungen je eine Draht-Schicht umfassen. Dabei bildet die Wicklung mit der ersten Draht-Schicht jeweils die erste Wicklung der Stator-Spule und die Wicklung mit der zweiten Draht-Schicht die zweite Wicklung der Stator-Spule. Vorzugsweise ist jede der Wicklungen so ausgelegt, dass die Wicklung den Motor der Werkzeugmaschine bei voller Drehzahl und halber Leistung betreiben kann. Somit wirkt der doppelt gewickelte Stator wie zwei einzelne Motoren, die allerdings auf einem Stator angeordnet bzw. aufgewickelt sind. Es ist im Sinne der Erfindung bevorzugt, dass sich die Teil-Leistungen der beiden Wicklungen im Wesentlichen zu der gesamten Leistung eines Vergleichsmotors aufaddieren, wobei die Stator-Spulen des Vergleichsmotors im Wesentlichen vollständig mit einer durchgehenden Draht-Schicht umwickelt sind. Dieser letzte Nebensatz bedeutet mit anderen Worten bevorzugt, dass die Angabe der ganzen oder halben Leistung oder Drehzahl im Kontext der vorliegenden Erfindung in Bezug auf einen Vergleichsmotor erfolgt, wobei der fiktive Vergleichsmotor dadurch charakterisiert ist, dass er im Wesentlichen vollständig mit einer durchgehenden Draht-Schicht umwickelt ist.

Es ist im Sinne der Erfindung bevorzugt, dass die erste Wicklung der Stator-Spulen von einem ersten Inverter bestromt wird, während die zweite Wicklung der Stator-Spulen von einem zweiten Inverter bestromt wird, so dass in Summe der beiden Wicklungen eine Leistung im Bereich des Vergleichsmotors für den Motor der Werkzeugmaschine bereitgestellt werden kann. Mit anderen Worten kann im Wesentlichen die gesamte Leistung eines Vergleichsmotors angefahren werden, wenn die Wicklungen des Stators von je einem Inverter bestromt werden. Vorzugsweise trägt jede Wicklung im Wesentlichen die Hälfte der Gesamt-Leistung eines Vergleichsmotors bei. Mit anderen Worten besteht der Beitrag jeder der beiden Wicklungsschichten ca. 50 % der Leistung des Vergleichsmotors.

Vorzugsweise kann die vorgeschlagene Werkzeugmaschine auch mehr als zwei Inverter aufweisen. Beispielsweise kann die Werkzeugmaschine 3, 4 ... oder n Inverter aufweisen, wobei der Beitrag zur Motorleistung der vorgeschlagenen Werkzeugmaschine dann 33 %, 25 % bzw. 1/n · 100 % beträgt.

Es ist im Sinne der Erfindung bevorzugt, dass der Vergleichsmotor keine zwei Wicklungen bzw. keine zwei Draht-Schichten umfasst, sondern lediglich eine Wicklung und eine Draht-Schicht, die die Wicklung bildet. Es ist im Sinne der Erfindung bevorzugt, dass der Stator drei Stator-Spulen-Paare umfasst. Vorzugweise weist der Motor der Werkzeugmaschine mindestens zwei Motorphasen auf.

Es ist im Sinne der Erfindung bevorzugt, dass der Motor ein bürstenloser Motor ist. Vorzugsweise handelt es sich im Kontext der vorliegenden Erfindung um einen elektronisch kommutierten Motor, der im Sinne der Erfindung bevorzugt auch als "EC-Motor" bezeichnet wird. Der Rotor des Motors der vorgeschlagenen Werkzeugmaschine kann beispielsweise ein Ankerfeld via Bürsten aufweisen. Beispielsweise können im Kontext der vorliegenden Erfindung n einzelne Akku-Elektroniken von bekannten Werkzeugmaschinen, die nur einen Akku aufweisen, über einen bürstenlosen Motor, der einen erfindungsgemäßen n-fach gewickelten Stator aufweist, miteinander verschaltet werden. In einem Ausführungsbeispiel der Erfindung können zwei einzelne Akku-Elektroniken über den EC-Motors mit doppelt gewickeltem Stator miteinander verschaltet werden, um die Leistung des Motors zu verdoppeln. Dadurch kann eine kostenoptimierte neue Werkzeugmaschinen-Elektronik erhalten werden, da solche einzelnen Akku-Elektroniken aufgrund der hohen Stückzahlen kostengünstig erhältlich sind. Es ist im Sinne der Erfindung bevorzugt, dass sich die Subsysteme aus Sub-Motoren, je einem Akku, einem Inverter und einer Elektronik den magnetischen Fluss im Blech des Stators des Gesamt-Motors teilen. Vorzugsweise kann eine Werkzeugmaschine n Subsystem umfassen, wobei ein Subsystem einen Akku, eine Elektronik und eine Wicklung im Motor umfasst. Mithin umfasst eine Werkzeugmaschine mit n Subsystemen n Akkus, n Elektroniken und n Wicklungen im Motor. Mit anderen Worten korrespondieren die Anzahlen der Subsysteme, Akkumulatoren, Elektroniken und Wicklungen im Motor der Werkzeugmaschine, wobei sich die Subsysteme bzw. ihre Komponenten den magnetischen Fluss im Statoreisen teilen.

In einem zweiten Aspekt betrifft die Erfindung ein Verfahren zum Betrieb einer Werkzeugmaschine, wobei die erste Wicklung der Stator-Spulen von einem ersten Inverter bestromt wird, während die zweite Wicklung der Stator-Spulen von einem zweiten Inverter bestromt wird, so dass eine Leistung im Bereich des Vergleichsmotors für den Motor der Werkzeugmaschine bereitgestellt wird. Die für die vorgeschlagene Werkzeugmaschine beschriebenen Definitionen, technischen Wirkungen und Vorteile gelten für das vorgeschlagene Betriebsverfahren analog. Es ist im Sinne der Erfindung insbesondere bevorzugt, dass durch die Bestromung der Wicklungen durch die beiden Inverter die volle Leistung des Motors bereitgestellt werden kann, wobei diese volle Leistung vorzugsweise der vollen Leistung des Vergleichsmotors entspricht. Neben dem ersten und dem zweiten Inverter können weitere Inverter, zum Beispiel drei oder vier, Inverter vorgesehen sein.

In einer Ausführungsform der Erfindung werden zwei alleinstehende oder unabhängige Inverter (stand-alone inverter) über den Motor der Werkzeugmaschine miteinander in Reihe geschaltet. Dabei ist es bevorzugt, dass die Inverter zwischen dem Motor und jeweils einem der zwei separaten Akkumulatoren angeordnet vorliegen. Mit anderen Worten können in dieser bevorzugten Ausgestaltung der Erfindung der erste Akku, der erste Inverter, der Motor, der zweite Inverter und der zweite Akku miteinander in Reihe geschaltet sein. Insbesondere wenn die Akkumulatoren unterschiedliche Spannungsniveaus bzw. Ladezustände aufweisen, ergibt sich im Kontext der vorliegenden Erfindung ein Ladungsausgleich. Üblicherweise hat der Akku mit einem geringeren Füllstand auch ein geringeres Spannungsniveau. Dadurch kann Ladung bzw. ein elektrischer Ausgleichsstrom von dem volleren Akku mit dem höheren Spannungsniveau in Richtung des anderen Akkus fließen, der beispielsweise einen geringeren Ladestand und ein niedrigeres Spannungsniveau aufweist.

Es ist im Sinne der Erfindung bevorzugt, dass die Werkzeugmaschine einen ersten Akkumulator und einen zweiten Akkumulator umfasst. Es können auch mehr als zwei Akkus vorgesehen sein, wobei zur besseren Leserlichkeit in diesem Dokument üblicherweise von zwei Akkumulatoren ausgegangen wird. Mit dem im Kontext der vorliegenden Erfindung vorgeschlagenen doppelt gewickelten Stator kann ein Ladungsausgleich zwischen den Akkumulatoren der Werkzeugmaschine besonders einfach durchgeführt werden. Es ist insbesondere möglich, dass der Ladungsausgleich in beide Richtungen erfolgen kann. Es ist im Sinne der Erfindung bevorzugt, die Ladung des leereren Akkus auf den Füllstand des volleren Akkus anzuheben. Das kann beispielsweise dadurch erfolgen, dass asymmetrisch Ladung aus den Akkumulatoren gezogen wird. Das asymmetrische Ziehen von Ladung bedeutet im Sinne der Erfindung bevorzugt, dass der vollere Akku zum Beispiel mit 70 % an der zu erbringenden Gesamtleistung beteiligt wird, während der leerere Akku mit 30 % an der Gesamtleistung beteiligt wird. Bei diesem Vorgang leeren sich beide Akkumulatoren weiter, aber unterschiedlich stark. Dadurch kann nach einer gewissen Zeit ein gleichmäßiger Füllstand der mindestens zwei Akkumulatoren erreicht werden.

Es kann im Sinne der Erfindung auch bevorzugt sein, dass einer der Akkus gefüllt wird, indem der eine Teil-Motor, d.h. der Motor, der dessen Stator-Spulen von einer der beiden Wicklungen gebildet wird, gegen den anderen Teil-Motor arbeitet. Mit anderen Worten arbeitet in diesem Ausführungsbeispiel der Erfindung die eine Inverter-Seite gegen die andere Inverter-Seite, so dass der eine Teil-Motor leicht gebremst wird. Dies führt vorzugsweise dazu, dass sich der erste Teil-Motor im Generator-Betrieb befindet, so dass sein Akku geladen werden kann.

Es ist im Sinne der Erfindung bevorzugt, dass der Ladungsausgleich zwischen einem ersten Akkumulator und einem zweiten Akkumulator der Werkzeugmaschine in beide Richtungen stattfinden kann. Dieser beidseitige Ladungsausgleich kann insbesondere dann stattfinden, wenn die Werkzeugmaschine im Stillstand ist.

Die Beidseitigkeit des Ladungsaustausch bzw. seine Bidirektionalität wird insbesondere dadurch erreicht, dass die beiden Wicklungen des Stators zusammen mit den ihnen zugeordneten Invertern eine vollständige H-Brücke bzw. eine Brückenschaltung bilden. Im Kontext der vorliegenden Erfindung wird ausgenutzt, dass sich diese Brückenschaltung wie ein bidirektionaler Gleichstrom-Gleichstrom-Wandler (DC-DC-Wandler) verhält, insbesondere wie ein Buck-/Boost-DC-DC-Wandler, wobei ein solcher Gleichstrom-Gleichstrom-Wandler Strom bzw. elektrische Energie in beide Richtungen "pumpen", d.h. befördern kann. Es ist im Sinne der Erfindung bevorzugt, dass die für den Ladungsausgleich erforderliche Induktivität von den Stator-Spulen des Motors der Werkzeugmaschine bereitgestellt wird. Die elektrische Energie wird dabei - ähnlich wie bei einem Transformator - von der einen Wicklung auf die andere Wicklung übertragen. Dadurch können etwaige Ladungsunterschiede bzw. unterschiedliche Ladestände der Akkumulatoren der Werkzeugmaschine ausgeglichen werden. Der beschriebene Ladungsausgleich bei Stillstand der Werkzeugmaschine kann insbesondere dadurch ermöglicht werden, dass der Motor der Werkzeugmaschine als Gleichstrom-Gleichstrom-Wandler (DC-DC-Wandler) verwendet wird.

Es ist im Sinne der Erfindung bevorzugt, dass der erste Akkumulator einen ersten Ladestand aufweist und der zweite Akkumulator einen zweiten Ladestand aufweist, wobei die Ladestände mittels dem zuvor beschriebenen Ladungsausgleich insbesondere mit Hilfe der Brückenschaltung ausgeglichen werden können, wenn die Werkzeugmaschine im Stillstand ist. Beispielsweise kann, wenn der erste Ladestand des ersten Akkus 75 % beträgt und der zweite Ladestand des zweiten Akkus 25 %, mit der Erfindung ein Ladungsausgleich mit dem Ziel durchgeführt werden, dass an dessen Ende beide Akkumulatoren einen Ladestand von etwa 50 % haben. Insbesondere ermöglicht ein so durchgeführter Ladungsausgleich, dass die Werkzeugmaschine länger effektiv genutzt werden kann, weil die Ladungen innerhalb der Akkumulatoren besser verteilt und so ausgenutzt werden können. Insbesondere wird die Situation vermieden, dass die Arbeit mit der Werkzeugmaschine beendet werden muss, obwohl einer der Akkumulatoren noch gut geladen ist.

Es ist im Sinne der Erfindung bevorzugt, dass jedem Akkumulator ein Inverter zugeordnet ist, wobei ein Ladungsausgleich zwischen einem Akkumulator mit einem höheren Ladestand und einem Akkumulator mit einem geringeren Ladestand dadurch erfolgt, dass der Akkumulator mit dem geringeren Ladestand mit dem ihm zugeordneten Inverter von einem Betriebs-Modus in einen Generator-Modus überführt wird. Dadurch kann vorteilhafterweise die Kapazität des Ackumulators mit dem höheren Ladestand angezapft werden, so dass es zu einem Ladungsausgleich kommt. Die Überführung des geringer geladenen Akkus von dem Betriebs- in den Generator-Modus kann insbesondere dadurch erfolgen, dass dem Inverter des geringer geladenen Akkumulators ein kleines Bremsmoment eingeprägt wird. Dieses Verfahren zur Durchführung eines Ladungsausgleichs zwischen den Akkumulatoren einer Werkzeugmaschine kann vorteilhafterweise auch während des Betriebs, d.h. bei der Arbeit mit der Werkzeugmaschine, durchgeführt werden, wozu es im Stand der Technik bisher keine technisch befriedigenden Lösungen gab.

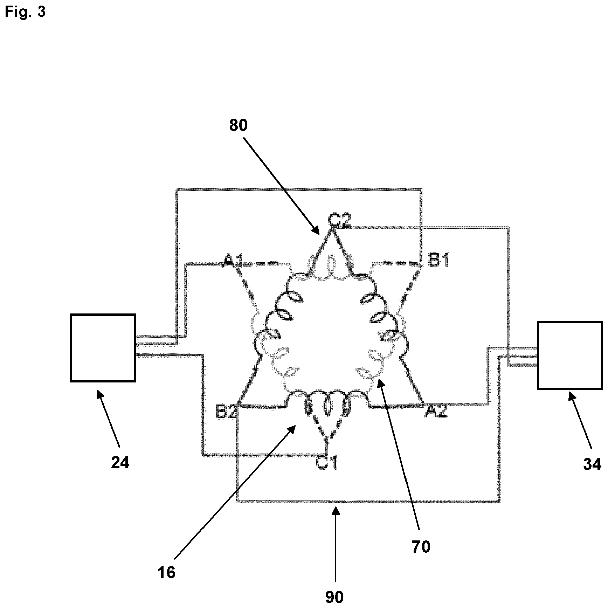

In Fig. 3 ist beispielsweise eine bevorzugte Ausgestaltung der Erfindung dargestellt, bei der die erste Wicklung über einen ersten Inverter mit einem ersten Akku verbunden ist, während die zweite Wicklung über einen zweiten Inverter mit einem zweiten Akku verbunden ist. Mit der in Fig. 3 dargestellten Schaltung kann ein Ladungsausgleich vorteilhafterweise sowohl bei Betrieb, als auch bei Stillstand der Werkzeugmaschine ermöglicht werden.

Ein Vorteil der vorgeschlagenen Erfindung besteht darin, dass die beiden Inverter auf eine einfache Akku-Spannung ausgelegt werden können. Dies ist besonders vorteilhaft, wenn mit kleinen Spannungen gearbeitet wird.

Ein weiterer wesentlicher Vorteil der Erfindung besteht darin, dass bei Ausfall einer Seite der Werkzeugmaschine bzw. bei einem leeren Akku mit einem halben Drehmoment im Vergleich zu einer intakten Werkzeugmaschine mit zwei zumindest teilweise geladenen Akkumulatoren weiter gearbeitet werden kann.

In einem dritten Aspekt betrifft die Erfindung ein Verfahren zur Durchführung eines Ladungsausgleichs zwischen zwei Akkumulatoren in einer Werkzeugmaschine, wobei die Werkzeugmaschine einen ersten Inverter zur Bestromung von ersten Stator-Spulen und einen zweiten Inverter zur Bestromung von zweiten Stator-Spulen umfasst, wobei die Inverter mit den Stator-Spulen eine Brückenschaltung bilden, die zur Durchführung eines Ladungsausgleichs zwischen den Akkumulatoren der Werkzeugmaschine eingerichtet ist. Die zuvor beschriebenen Definitionen, technischen Wirkungen und Vorteile gelten für das vorgeschlagene Balancing- oder Ladungsausgleichsverfahren analog. Es ist im Sinne der Erfindung bevorzugt, dass die Stator-Spulen einen Stator bilden, der eine erste Wicklung und eine zweite Wicklung aufweist, wobei der Ladungsausgleich dadurch erfolgt, dass elektrische Energie von der ersten Wicklung auf die zweite Wicklung des Stators übertragen wird, oder umgekehrt.

Weitere Vorteile ergeben sich aus der folgenden Figurenbeschreibung. In den Figuren ist ein Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert. Es zeigt:
- Fig. 1: Ausführungsbeispiel für einen doppelt gewickelten Stator gemäß einer bevorzugten Ausgestaltung der Erfindung
- Fig. 2: Darstellung einer möglichen Ausgestaltung des Stators mit drei Stator-Spulen-Paaren
- Fig. 3: beispielhaftes Schaltbild für einen doppelt gewickelten Stator mit zwei Akkumulatoren

### Ausführungsbeispiele und Figurenbeschreibung:

Fig. 1 zeigt eine beispielhafte Ausgestaltung des vorgeschlagenen Motors 12 der Werkzeugmaschine 10, wobei eine Werkzeugmaschine 10 in den Figuren nicht dargestellt wird. Zu sehen sind in Fig. 1 der Rotor 14 und der Stator 16 des Motors 12 der Werkzeugmaschine 10, bei dem es sich vorzugsweise um einen bürstenlosen Elektromotor handelt. Der Stator 16 umfasst eine Reihe von Stator-Spulen 20, 30, die beispielsweise paarweise angeordnet sein können oder Stator-Spulen-Paare 18 bilden können. Vorzugsweise kann je eine Gruppe von Stator-Spulen als erste Stator-Spulen 20 und die andere Gruppe von Stator-Spulen als zweite Stator-Spulen 30 bezeichnet werden. Der Stator 16 des Motors 12 der Werkzeugmaschine 10 umfasst eine erste Wicklung 70 und eine zweite Wicklung 80, wobei die Wicklungen 70, 80 jeweils eine Draht-Schicht 22, 32 umfassen. Es ist im Sinne der Erfindung bevorzugt, dass die erste Wicklung 70 eine erste Draht-Schicht 22 umfasst, während die zweite Wicklung 80 eine zweite Draht-Schicht 32 umfasst. Vorzugsweise umfasst jede Stator-Spule 20, 30 je eine erste Draht-Schicht 22 und eine zweite Draht-Schicht 32, wobei die ersten Draht-Schichten 22 der Stator-Spulen 20, 30 die erste Wicklung 70 des Stators 16 bilden, während die zweiten Draht-Schichten 32 der Stator-Spulen 20, 30 die zweite Wicklung 80 des Stators 16 bilden. Jede der beiden Wicklungen 70, 80 ermöglicht einen Betrieb der Werkzeugmaschine 10 dergestalt, dass eine volle Drehzahl, aber lediglich eine halbe Leistung im Vergleich zum Betrieb eines Vergleichsmotors erbracht werden kann. Der Vergleichsmotor entspricht im Wesentlichen dem vorgeschlagenen Motor, allerdings weist der Stator des Vergleichsmotors lediglich eine Wicklung, d.h. eine Draht-Schicht, auf. Vorzugsweise wird jede der beiden Wicklungen 70, 80 des vorgeschlagenen doppelt gewickelten Stators 16 von einem Inverter 24, 34 bestromt, wobei die erste Wicklung 70 des Stators 16 des Motors 12 der Werkzeugmaschine 10 von dem ersten Inverter 24 bestromt wird, während die zweite Wicklung 80 des Stators 16 des Motors 12 der Werkzeugmaschine 10 von dem zweiten Inverter 34 bestromt wird. Dadurch kann vorteilhafterweise die gesamte Leistung des Motors 12 angefahren werden, wobei jede Wicklungsschicht 70, 80 in etwa 50 % zur Leistung des Motors 12 beiträgt.

Darüber hinaus zeigt Fig. 1 die elektrischen Leitungen 60, die jeweils zwischen den ersten Draht-Schichten 22 von nebeneinander liegenden Stator-Spulen 20, 30 bestehen können. Auf der Innenseite des Stators 16 können elektrische Leitungen angeordnet vorliegen, die jeweils die ersten Draht-Schichten 22 innerhalb einer Stator-Spule 20, 30 miteinander verbinden. Die Innenseite des Stators 16 ist vorzugsweise dem Rotor 14 des Motors 12 der Werkzeugmaschine 10 zugewandt, da der Rotor 14 des Motors 12 der Werkzeugmaschine 10 im Inneren des Motors 12 der Werkzeugmaschine 10 angeordnet ist. Die in Fig. 1 dargestellte Verschaltung ist lediglich ein Ausführungsbeispiel der Erfindung unter vielen anderen Möglichkeiten. Die von den Wicklungen 70, 80 abgehenden Leitungen gehen zu je einem der Inverter 24, 34. Bei dem Motor 12 der Werkzeugmaschine 10 kann es sich auch um einen Außenläufermotor handeln.

Fig. 2 zeigt eine mögliche Ausgestaltung des Stators 16 des Motors 12 der Werkzeugmaschine 10 mit drei Stator-Spulen-Paaren 18. Jedes Stator-Spulen-Paar 18 umfasst vorzugsweise eine erste Stator-Spule 22 und eine zweite Stator-Spule 32, wobei sich diese erste Stator-Spule 22 und die zweite Stator-Spule 32, die gemeinsam ein Stator-Spulen-Paar 18 bilden, vorzugsweise im Stator 16 des Motors 12 der Werkzeugmaschine 10 gegenüber liegen. Die drei Stator-Spulen-Paare 18 werden in Fig. 2 und den Teilfiguren 2a, 2b und 2c als Stator-Spulen-Paare 18a, 18b und 18c bezeichnet.

Fig. 3 zeigt ein Schaltbild für eine bevorzugte Ausführungsform vorgeschlagenen doppelt gewickelten Stators 16 mit den zwei Invertern 24, 34. In der Mitte von Fig. 3 ist der Stator 16 des Motors 12 der Werkzeugmaschine 10 abgebildet. Die Buchstaben A, B, C stehen für die drei Stator-Spulen-Paare 18a, 18b und 18c, während die Zahlen 1 und 2 andeuten, ob es sich um die erste Stator-Spule 22 oder um die zweite Stator-Spule 32 eines Stator-Spulen-Paares 18 handelt. Mit anderen Worten bilden die Stator-Spulen A1, B1, C1 die ersten Stator-Spulen 22 der Stator-Spulen-Paare 18, während die Stator-Spulen A2, B2 und C2 die zweiten Stator-Spulen 32 der Stator-Spulen-Paare 18 bilden. Die ersten Stator-Spulen A1, B1, C1 sind vorzugsweise mit dem ersten Inverter 24 verbunden, während die zweiten Stator-Spulen A2, B2 und C2 vorzugsweise mit dem zweiten Inverter 34 verbunden sind. Es ist im Sinne der Erfindung bevorzugt, dass die Inverter 24, 34 und die Stator-Spulen 20, 30 eine Brückenschaltung 90 bzw. eine H-Brücke bilden, wobei über diese Brückenschaltung 90 ein Ladungsausgleich zwischen den Akkumulatoren 40, 50 der Werkzeugmaschine 10 ermöglicht werden kann. Die Akkumulatoren 40, 50 sind in den Figuren nicht dargestellt. Dies ist insbesondere dadurch möglich, dass der Motor 12 der Werkzeugmaschine 10 als Gleichstrom-Gleichstrom-Wandler eingesetzt wird. Dadurch kann elektrische Energie von der ersten Wicklung 70 des Stators 16 auf die zweite Wicklung 80 des Stators 16 übertragen werden, oder umgekehrt. Durch die Möglichkeit, elektrische Energie von einer Wicklung 70 des Stators 16 auf eine andere Wicklung 80 zu übertragen, kann die Energie auch von dem einen Akku 40 auf den anderen Akku 50 übertragen werden, so dass es Ausgleich von etwaigen Ladungsunterschieden erfolgen kann. Dieses Verfahren zum Ladungsausgleich kann insbesondere bei Stillstand der Werkzeugmaschine 10 durchgeführt werden. Sein Vorteil besteht insbesondere darin, dass elektrische Energie in beide Richtungen übertragen werden kann.

Mit der vorgeschlagenen Erfindung des doppelt gewickelten Stators 16 kann auch ein Ladungsausgleich während des Betriebs der Werkzeugmaschine 10 durchgeführt werden. Dazu kann der Inverter (Bsp: 24), der mit dem aufzuladenden Akku verbunden ist, von dem Motorbetrieb in den generatorischen Betrieb umgeschaltet werden. Dadurch kann die Kapazität des volleren Akkus (Bsp: 50) verwendet werden, um den Akku (Bsp: 40) mit dem geringeren Ladestand wieder aufzuladen. Dieses Verfahren kann insbesondere durch das Einprägen eines kleinen Bremsmoments ermöglicht werden. Dieser Bremsbetrieb kann zur Erzeugung von elektrischer Energie verwendet werden, wobei die elektrische Energie vorzugsweise zum Aufladen des Ackumulators mit dem niedrigeren Ladestand verwendet werden kann. Insbesondere kann seine Kapazität mit der erzeugten elektrischen Energie aufgeladen werden. Durch diese Zweifachspeisung können virtuell zwei Motoren unabhängig voneinander geregelt werden, wobei ein Teil-Motor gegen den anderen Teil-Motor arbeiten und diesen abbremsen kann. Der eine Teil-Motor kann dadurch vorteilhafterweise in den Generator-Betrieb gehen und seinen Akkumulator aufladen. Es ist im Sinne der Erfindung bevorzugt, dass in Fig. 3 jedes der beiden Spulen-Dreiecke einen Teil-Motor darstellt. Mit anderen Worten stellt eines der Spulen-Dreiecke den ersten Teil-Motor 20, 24, 70 der vorgeschlagenen Werkzeugmaschine 10 dar, während das andere Spulen-Dreieck den zweiten Teil-Motor 30, 34, 80 der vorgeschlagenen Werkzeugmaschine 10 darstellt.

### Bezugszeichenliste

- 10: Werkzeugmaschine
- 12: Motor der Werkzeugmaschine
- 14: Rotor
- 16: Stator
- 18: Stator-Spulen-Paar
- 20: erste Stator-Spule
- 22: erste Draht-Schicht
- 24: erster Inverter
- 30: zweite Stator-Spule
- 32: zweite Draht-Schicht
- 34: zweiter Inverter
- 40: erster Akkumulator
- 50: zweiter Akkumulator
- 60: elektrische Leitung
- 70: erste Wicklung
- 80: zweite Wicklung
- 90: H-Brücke oder Brückenschaltung

## Patentansprüche

1. Werkzeugmaschine (10) mit einem Motor (12), wobei der Motor einen Rotor (14) und einem Stator (16) umfasst,
**gekennzeichnet dadurch, dass**
der Stator (16) eine erste Wicklung (70) und eine zweite Wicklung (80) umfasst, wobei die Wicklungen (70, 80) so ausgebildet sind, dass die Wicklungen (70, 80) einen Betrieb des Motors (12) der Werkzeugmaschine (10) mit einer Drehzahl im Bereich eines Vergleichsmotors, aber im Wesentlichen halber Leistung im Vergleich zu dem Vergleichsmotor ermöglichen, wobei die Stator-Spulen des Vergleichsmotors im Wesentlichen vollständig mit einer durchgehenden Wicklung gewickelt sind.

2. Werkzeugmaschine (10) nach Anspruch 1
**gekennzeichnet dadurch, dass**
die Werkzeugmaschine (10) einen ersten Akkumulator (40) und einen zweiten Akkumulator (50) umfasst.

3. Werkzeugmaschine (10) nach Anspruch 1 oder 2
**gekennzeichnet dadurch, dass**
der Stator (16) eine Anzahl von Stator-Spulen-Paaren (18) umfasst, wobei jedes Stator-Spulen-Paar (18) eine erste Stator-Spule (20) und eine zweite Stator-Spule (30) umfasst.

4. Werkzeugmaschine (10) nach Anspruch 3
**gekennzeichnet dadurch, dass**
sich die Stator-Spulen (20, 30) eines Stator-Spulen-Paares (18) innerhalb des Stators (16) im Wesentlichen gegenüberliegen.

5. Werkzeugmaschine (10) nach einem der vorhergehenden Ansprüche
**gekennzeichnet dadurch, dass**
der Stator (16) drei Stator-Spulen-Paare (18) umfasst.

6. Werkzeugmaschine (10) nach einem der Ansprüche 3 bis 5
**gekennzeichnet dadurch, dass**
die Werkzeugmaschine (10) einen ersten Inverter (24) und einen zweiten Inverter (34) aufweist und dass die Inverter (24, 34) mit den Stator-Spulen (20, 30) eine Brückenschaltung (90) bilden.

7. Werkzeugmaschine (10) nach einem der Ansprüche 3 bis 6
**gekennzeichnet dadurch, dass**
die erste Wicklung (70) eine erste Draht-Schicht (22) und die zweite Wicklung (80) eine zweite Draht-Schicht (32) umfasst, wobei jede Stator-Spule (20, 30) eine erste Draht-Schicht (22) und eine zweite Draht-Schicht (32) umfasst.

8. Werkzeugmaschine (10) nach einem der vorhergehenden Ansprüche
**gekennzeichnet dadurch, dass**
der Motor (12) ein bürstenloser Motor ist.

9. Verfahren zum Betrieb einer Werkzeugmaschine (10) nach einem der vorhergehenden Ansprüche
**gekennzeichnet dadurch, dass**
die erste Wicklung (70) des Stators (16) von einem ersten Inverter (24) bestromt wird, während die zweite Wicklung (80) des Stators (16) von einem zweiten Inverter (34) bestromt wird, so dass in Summe eine Leistung im Bereich des Vergleichsmotors für den Motor (12) der Werkzeugmaschine (10) bereitgestellt wird.

10. Verfahren nach Anspruch 9
**gekennzeichnet dadurch, dass**
ein Ladungsausgleich zwischen einem ersten Akkumulator (40) und einem zweiten Akkumulator (50) der Werkzeugmaschine (10) in beide Richtungen stattfinden kann.

11. Verfahren nach Anspruch 10
**gekennzeichnet dadurch, dass**
jedem Akkumulator (40, 50) ein Inverter (24, 34) zugeordnet ist, wobei ein Ladungsausgleich zwischen einem Akkumulator (40) mit einem höheren Ladestand und einem Akkumulator (50) mit einem geringeren Ladestand dadurch erfolgt, dass der Ackumulator (50) mit dem geringeren Ladestand mit dem ihm zugeordneten Inverter (24 oder 34) von einem Betriebs-Modus in einen Generator-Modus überführt wird.

12. Verfahren zur Durchführung eines Ladungsausgleichs zwischen zwei Akkumulatoren (40, 50) in einer Werkzeugmaschine (10)
**gekennzeichnet dadurch, dass**
die Werkzeugmaschine (10) einen ersten Inverter (24) zur Bestromung von ersten Stator-Spulen (20) und einen zweiten Inverter (34) zur Bestromung von zweiten Stator-Spulen (30) umfasst, wobei die Inverter (24, 34) mit den Stator-Spulen (20, 30) eine Brückenschaltung (90) bilden, die zur Durchführung eines Ladungsausgleichs zwischen den Akkumulatoren (40, 50) der Werkzeugmaschine (10) eingerichtet ist.

13. Verfahren nach Anspruch 12
**gekennzeichnet dadurch, dass**
die Stator-Spulen (20, 30) einen Stator (16) bilden, der eine erste Wicklung (70) und eine zweite Wicklung (80) aufweist, wobei der Ladungsausgleich dadurch erfolgt, dass elektrische Energie von der ersten Wicklung (70) auf die zweite Wicklung (80) des Stators (16) übertragen wird, oder umgekehrt.
